# EUROPÄISCHE PATENTANMELDUNG

(11) **EP 1 150 097 A1**
(43) Veröffentlichungstag der Anmeldung: **31.10.2001**
(21) Anmeldenummer: 00108836.8
(22) Anmeldetag: 26.04.2000
(51) Int. Cl.: G01C 15/00

(54) **Optischer Entfernungsmesser**

(71) Anmelder: Leica Geosystems AG, 9435 Heerbrugg (CH)
(72) Erfinder: Gächter, Bernhard, 9436 Balgach (CH); Schilling, Andreas, 2000 Neuchâtel (CH); Stauffer, Laurent, 9443 Widnau (CH); Vokinger, Urs, 9434 Au (CH)
(74) Vertreter: Kaminski, Susanne, Dr.

(57) **Zusammenfassung**

Zwecks Verbesserung der Zielausleuchtung weist eine Lichtquelle (2) eines Senders mit einer als Kantenemitter mit einer Wellenlänge von 1'550 nm ausgebildeten Laserdiode (3) eine derselben nachgeordnete Strahlformungsoptik (4) auf, die eine Zylinderlinse (7) umfasst sowie ein erstes Umlenkelement (8) mit drei verschiedene Beugungsstrukturen tragenden Feldern, welches von aufeinanderfolgenden Abschnitten der Emissionskante ausgehende Teilstrahlen auf quer zu derselben nebeneinanderliegende, ebenfalls drei verschiedene Beugungsstrukturen tragende Felder eines zweiten Umlenkelements (10) ablenkt, das die Teilstrahlen derart auf die Apertur eines Kollimators (1) lenkt, dass sie dieselbe im wesentlichen ausfüllen. Das erste Umlenkelement (8) und eine Halterung (6) für die Zylinderlinse (7) sind einstückig und wie das zweite Umlenkelement (10) aus Kunststoff hergestellt. Die beiden Teile sind auf entgegengesetzte Stirnflächen eines Blocks (5) aus Glas aufgeklebt.

## Beschreibung

### Technisches Gebiet

Die Erfindung betrifft einen optischen Entfernungsmesser, wie sie z. B. bei Vermessungen von Grundstücken und Bauten eingesetzt werden.

### Stand der Technik

Gattungsgemässe optische Entfernungsmesser sind seit längerem bekannt. Die als Lichtquellen eingesetzten Laserdioden haben jedoch den Nachteil, dass der an der Emissionskante austretende Lichtstrahl einen sehr langen und schmalen Querschnitt aufweist. Dies führt zu schlechter Zielausleuchtung, da nur ein Teil des Lichtstrahls auf das Ziel fällt und beeinträchtigt damit die Reichweite und die Messgenauigkeit. Dazu kann die Messung auch durch Reflexion von das Ziel verfehlenden Teilen des Strahles an anderen, z. B. weiter entfernten Objekten empfindlich gestört werden.

### Darstellung der Erfindung

Der Erfindung liegt die Aufgabe zu Grunde, einen gattungsgemässen optischen Entfernungsmesser anzugeben, mit dem eine bessere Zielausleuchtung erzielt wird als bei bekannten gattungsgemässen Entfernungsmessern.

Die durch die Erfindung erzielten Vorteile liegen vor allem in einer entscheidenden Verbesserung der Reichweite, d. h. der maximalen Messdistanz oder, bei gegebener Reichweite, einer Erhöhung der Messgenauigkeit.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1a: schematisch eine Seitenansicht eines Senders eines erfindungsgemässen Entfernungsmessers,
- Fig. 1b: schematisch eine Draufsicht auf den Sender gemäss Fig. 1a,
- Fig. 3: eine Draufsicht in Strahlrichtung auf ein erstes Umlenkelement des Senders gemäss Fig. 1a,b,
- Fig. 4: eine Draufsicht entgegen der Strahlrichtung auf ein zweites Umlenkelement des Senders gemäss Fig. 1a,b und
- Fig. 5: die Zielausleuchtung durch den Sender gemäss Fig. 1a,b.

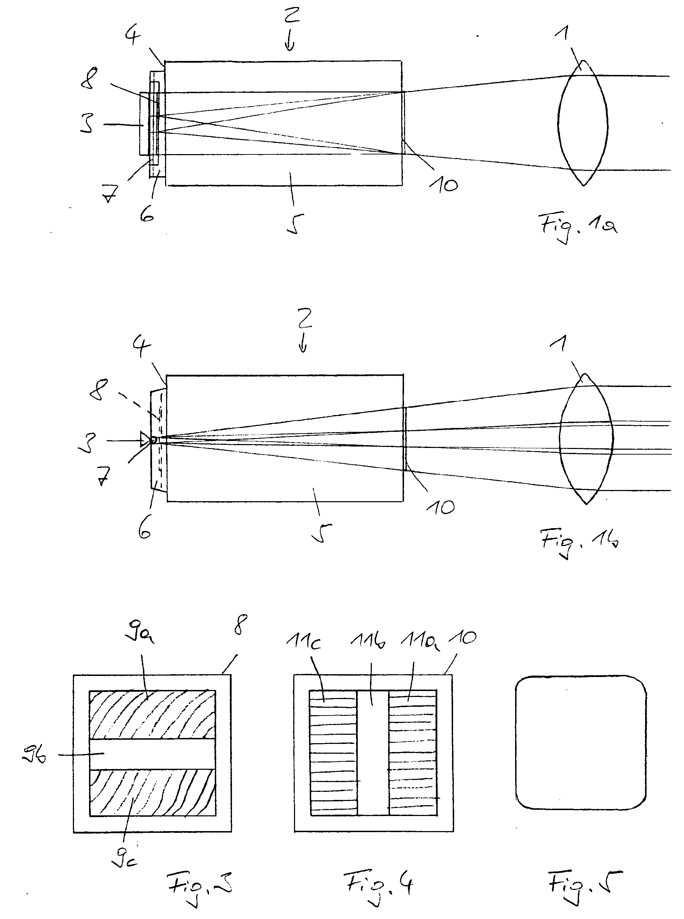

### Wege zur Ausführung der Erfindung

Ein erfindungsgemässer optischer Entfernungsmesser weist einen Sender auf sowie einen Empfänger, welcher z. B. in bekannter Weise mit einer Optik und avalanche-Photodioden aufgebaut sein kann sowie eine elektronische Steuer- und Auswerteeinheit ebenfalls bekannter Ausbildung, welche die Aussendung von Lichtimpulsen durch den Sender steuert und das Ausgangssignal des Empfängers auswertet. Die Entfernungsmessung kann durch Laufzeitmessung oder nach dem Phasenvergleichsverfahren erfolgen.

Der Sender weist einen Kollimator 1 auf und eine demselben vorgeordnete Lichtquelle 2, die sich aus einer Laserdiode 3 und einer Strahlformungsoptik 4 zusammensetzt. Die Laserdiode 3 ist ein Kantenemitter, der elektromagnetische Wellen im Infrarotbereich, vorzugsweise mit einer zwischen 850 nm und 980 nm liegenden Wellenlänge oder einer Wellenlänge λ = 1'550 nm aussendet. Die Emissionskante weist eine Länge von zwischen 30 µm und 800 µm auf, während ihre Breite zwischen 1 µm und 3 µm liegt. Die Emissionskante kann in Längsrichtung auch unterbrochen sein. Beispielsweise kann statt der einen Laserdiode 3 eine lineare Anordnung von Laserdioden mit Kantenlängen von z. B. 50 µm und Abständen zwischen aufeinanderfolgenden Kanten von 100 µm vorgesehen sein. Die numerische Apertur, welche dem Sinus des halben Oeffnungswinkels entspricht, liegt parallel zur Emissionskante bei 0,1, quer zu derselben bei 0,6 bis 0,7. Das Produkt beider Grössen, bekannt als SBP (space bandwidth product) ist quer zur Emissionskante ungefähr gleich der Wellenlänge und damit praktisch monomodal (transversale Mode 0), d. h. es liegt in der Nähe eines grundsätzlichen, nicht überschreitbaren Grenzwerts, während es parallel zur Emissionskante um einen Faktor 10 bis 100 grösser ist als dieser Grenzwert. Auch in dieser Richtung ist das SBP zwar durch konventionelle lichtbrechende Elemente wie Linsen nicht veränderbar, doch kann es mittels auf Lichtbeugung oder -brechung beruhender Elemente sehr nahe an der Emissionskante durch Umlagerung parallel zu derselben verringert und dafür quer dazu vergrössert und der Lichtstrahl dadurch stärker konzentriert werden.

Diesem Zweck dient die Strahlformungsoptik 4, die einen quaderförmigen Block 5 aus einem transparenten Material, vorzugsweise Glas umfasst, mit einer ersten Stirnfläche, die der Laserdiode 3 zugewandt ist und einer entgegengesetzten zweiten Stirnfläche, die dem Kollimator 1 zugewandt ist. Die erste Stirnfläche trägt eine Halterung 6 aus Kunststoff, welche eine Zylinderlinse 7 an ihren Endbereichen festhält. Die Zylinderlinse 7 weist runden Querschnitt auf, ihr Durchmesser beträgt ca. 60 µm. Sie ist parallel zur Emissionskante der Laserdiode 3 ausgerichtet und von derselben um ca. 10 µm beabstandet. Sie parallelisiert den von der Emissionskante ausgehenden Lichtstrahl, der bei Laserdioden der verwendeten Art quer einen grossen Abstrahlwinkel von ca. 80° aufweist. Der Durchmesser der Zylinderlinse und ihr Abstand von der Emissionskante können auch wesentlich grösser sein als angegeben, doch ist bei kleinen Werten, insbesondere von höchstens 65 µm bzw. höchsten 15 µm die Ueberlappung der von den aufeinanderfolgenden Bereichen der Kante kohärent abgestrahlten Anteile sehr gering, was auch die durch die Ueberlappung verursachten Verluste niedrig hält.

Der Zylinderlinse 7 nachgeordnet ist ein mit der Halterung 6 einstückiges erstes Umlenkelement 8, welches eine im wesentlichen ebene zur ersten Stirnfläche des Blocks 5 parallele strukturierte Oberfläche bildet. Sie zerfällt parallel zur Emissionskante in drei aufeinanderfolgende Felder 9a,b,c, welche unterschiedliche treppenartige Beugungsstrukuren tragen. Die entgegengesetzte zweite Stirnfläche des Blocks 5 trägt ein zweites Umlenkelement 10 aus Kunststoff, welches eine im wesentlichen ebene zur zweiten Stirnfläche parallele strukturierte Oberfläche aufweist, die in drei quer zur Emissionskante aufeinanderfolgende Felder 11a,b,c zerfällt, welche ebenfalls unterschiedliche treppenartige Beugungsstrukturen tragen.

Das obere Feld 9a des ersten Umlenkelements 8 ist so strukturiert, dass es den von einem oberen Abschnitt der Emissionskante ausgehenden Teilstrahl, von dem es getroffen wird, auf das in Strahlrichtung gesehen linke Feld 11a des zweiten Umlenkelements 10 lenkt, wo der Strahl geringfügig abgelenkt wird, so dass er auf den Kollimator 1 fällt und etwa das linke Drittel der Apertur desselben füllt. In genau entsprechender Weise lenkt das untere Feld 9c des ersten Umlenkelements 8 den von einem unteren Abschnitt der Emissionskante ausgehenden Teilstrahl, von dem es getroffen wird, auf das in Strahlrichtung gesehen rechte Feld 11c des zweiten Umlenkelements 10, wo es ebenfalls genau entsprechend abgelenkt wird und im weiteren etwa das rechte Drittel der Apertur des Kollimators 1 füllt. Das mittlere Drittel desselben wird von dem von einem etwas kürzeren mittleren Abschnitt der Emissionskante ausgehenden Teilstrahl ausgefüllt, der unabgelenkt durch die unstrukturierten mittleren Felder 9b und 11b des ersten Umlenkelements 8 bzw. des zweiten Umlenkelements 10 geht.

Die drei Teilstrahlen werden also vom ersten Umlenkelement 8 derart unterschiedlich abgelenkt, dass sie quer zur Emissionskante gesehen nebeneinander auf das zweite Umlenkelement 10 fallen, mithin ihre Projektionen auf eine von der Richtung der Emissionskante und der Strahlrichtung aufgespannte Ebene im wesentlichen zusammenfallen. Vom zweiten Umlenkelement 10 werden sie dann derart unterschiedlich abgelenkt, dass sie so auf den Kollimator 1 treffen, als ob sie jeweils von einer zur Emissionskante parallelen Linie in der Brennebene des Kollimators 1 ausgingen oder, anders ausgedrückt, so, dass ihre rückwärtige Extrapolation jeweils zu einer solchen Linie führt und jeder Teilstrahl etwa ein Drittel der Apertur des Kollimators 1 ausfüllt. Die drei aufeinanderfolgenden Abschnitte der Emissionskante werden auf ein nahezu quadratisches Feld abgebildet, und zwar derart, dass sie sich im Fernfeld überlagern (Fig. 5). Dies stellt eine ausgezeichnete Zielausleuchtung sicher.

Bei Wellenlängen zwischen 850 nm und 980 nm kann der Strahl sehr eng gebündelt werden, was eine Distanzrasterung mit hoher lateraler Auflösung gestattet. Sehr vorteilhaft sind auch Wellenlängen um 1'550 nm, weil dann die im Hinblick auf die Augensicherheit gegebene Obergrenze der zulässigen Einzelpulsenergie mit ca. 8 mJ um einen Faktor von ca. 16'000 höher liegt als bei Wellenlängen zwischen 630 nm und 980 nm. Die wenigstens teilweise Ausnützung dieses Faktors, die erfindungsgemäss dank der besseren Konzentration des Strahls möglich ist, gestattet eine sehr wesentliche Steigerung der Reichweite oder - bei gegebener Reichweite - der Empfindlichkeit.

Die Halterung 6 und das mit ihr einstückige erste Umlenkelement 8 sowie das zweite Umlenkelement 10 werden jeweils in einer der Replica-Techniken hergestellt, wie sie in M. T. Gale: 'Replication' in H. P. Herzig (ed.): 'Micro-Optics', Taylor & Francis 1997, S. 153-177 beschrieben sind - z. B. Aetzen einer Rolle oder eines Stempels aus Quarz und Heissprägen, Spritzgiessen oder Giessen mit anschliessender UV-Härtung - und mit dem Block 5 verklebt. Die Bestimmung der Beugungsstrukturen kann mit bekannten Computerprogrammen erfolgen. Das Replica-Verfahren erlaubt eine kostengünstige Herstellung hoher Stückzahlen. Dass auch die Halterung 6 in dieser Technik hergestellt wird, gestattet eine sehr präzise Positionierung der Zylinderlinse 7. Die Abstandstoleranz derselben bezüglich des ersten Umlenkelements 8 beträgt wenige µm. Mit Löttechnik und aktiver Justage, wie sie in DE-A-197 51 352 beschrieben sind, kann weiter die Laserdiode 3 so mit der Strahlformungsoptik 4 verbunden werden, dass die Montagetoleranz zwischen derselben und der Zylinderlinse 7 etwa 0,5 µm beträgt.

Es sind verschiedene Abwandlungen der beschriebenen Ausführung möglich. So kann etwa die Zylinderlinse mit Kitt direkt an der Laserdiode befestigt sein. Das erste Umlenkelement und das zweite Umlenkelement können auch aus Glas bestehen und etwa durch ein Aetzverfahren hergestellt sein. Sie können auch direkt in den sie trennenden Block eingeätzt sein. Die Zahl der Felder der Umlenkelemente kann statt drei auch zwei, vier oder mehr betragen. Die Strahlformungsoptik kann auch aus lichtbrechenden Elementen, z. B. Prismen und Platten bestehen. Schliesslich können auch Laserdioden mit Wellenlängen vor allem zwischen 600 nm und 1'000 nm und insbesondere zwischen 630 nm und 980 nm eingesetzt werden, die ausserhalb der oben angegebenen Bereiche liegen.

### Bezugszeichenliste

- 1: Kollimator
- 2: Lichtquelle
- 3: Laserdiode
- 4: Strahlformungsoptik
- 5: Block
- 6: Halterung
- 7: Zylinderlinse
- 8: erstes Umlenkelement
- 9a,b,c: Felder
- 10: zweites Umlenkelement
- 11a,b,c: Felder

## Patentansprüche

1. Optischer Entfernungsmesser mit einem Sender, welcher einen Kollimator (1) umfasst und mindestens eine dem Kollimator (1) vorgeordnete Lichtquelle (2) mit einer als Kantenemitter ausgebildeten Laserdiode (3) sowie mit einem Empfänger und einer Steuerungs- und Auswerteeinheit, **dadurch gekennzeichnet, dass** die Lichtquelle (2) eine der Laserdiode (3) nachgeordnete Strahlformungsoptik (4) aufweist, welche von aufeinanderfolgenden Abschnitten der Emissionskante der Laserdiode (3) ausgesandte Teilstrahlen parallel zu derselben derart gegeneinander versetzt, dass ihre Projektionen auf eine durch die Emissionskante und die Strahlrichtung aufgespannte Ebene mindestens weitgehend überlappen.

2. Optischer Entfernungsmesser nach Anspruch 1, **dadurch gekennzeichnet, dass** die Laserdiode (3) mit einer Wellenlänge von zwischen 850 nm und 980 nm sendet.

3. Optischer Entfernungsmesser nach Anspruch 1, **dadurch gekennzeichnet, dass** die Laserdiode (3) mit einer Wellenlänge von ca. 1'550 nm sendet.

4. Optischer Entfernungsmesser nach einem der Ansprüche 1 bis 3, **dadurch gekennzeichnet, dass** die Strahlformungsoptik (4) eine unmittelbar auf die Laserdiode (3) folgende Zylinderlinse (7) umfasst, deren Achse zur Emissionskante der Laserdiode (3) parallel ist.

5. Optischer Entfernungsmesser nach Anspruch 4, **dadurch gekennzeichnet, dass** der Durchmesser der Zylinderlinse (7) höchstens 65 µm beträgt.

6. Optischer Entfernungsmesser nach Anspruch 4 oder 5, **dadurch gekennzeichnet, dass** der Abstand zwischen der Emissionskante und der Zylinderlinse (7) höchstens 15 µm beträgt.

7. Optischer Entfernungmesser nach einem der Ansprüche 1 bis 6, **dadurch gekennzeichnet, dass** es ein erstes Umlenkelement (8) und ein zweites Umlenkelement (10) umfasst, wobei das erste Umlenkelement (8) die Teilstrahlen quer zur Emissionskante wie auch parallel zu derselben derart unterschiedlich ablenkt, dass sie im wesentlichen nebeneinander auf das zweite Umlenkelement (10) treffen und das zweite Umlenkelement (10) die Teilstrahlen so ausrichtet, als ob sie jeweils von einer Linie in der Brennebene des Kollimators (1) ausgingen.

8. Optischer Entfernungsmesser nach Anspruch 7, **dadurch gekennzeichnet, dass** das erste Umlenkelement (8) mehrere parallel zur Emissionskante aufeinanderfolgende Felder (9a, 9b, 9c) aufweist, welche unterschiedliche Beugungsstrukturen tragen und das zweite Umlenkelement (10) ebenso viele quer zur Emissionskante aufeinanderfolgende Felder (11a, 11b, 11c) aufweist, welche unterschiedliche Beugungsstrukturen tragen.

9. Optischer Entfernungsmesser nach Anspruch 8, **dadurch gekennzeichnet, dass** das erste Umlenkelement (8) und das zweite Umlenkelement (10) jeweils eine die Beugungsstrukturen tragende strukturierte, im wesentlichen ebene Oberfläche aufweisen.

10. Optischer Entferungsmesser nach einem der Ansprüche 7 bis 9, **dadurch gekennzeichnet, dass** die Strahlformungsoptik (4) einen Block (5) aus transparentem Material aufweist, mit einer ersten Stirnfläche, an welcher das erste Umlenkelement (8) befestigt ist und einer entgegengesetzten zweiten Stirnfläche, an welcher das zweite Umlenkelement (10) befestigt ist.

11. Optischer Entfernungsmesser nach einem der Ansprüche 7 bis 10, **dadurch gekennzeichnet, dass** das erste Umlenkelement (8) und das zweite Umlenkelement (10) aus Kunststoff bestehen.

12. Optischer Entfernungsmesser nach Anspruch 10 oder 11, **dadurch gekennzeichnet, dass** die Zylinderlinse (7) an einer Halterung (6) verankert ist, welche an der ersten Stirnfläche des Blocks (5) befestigt ist.

13. Optischer Entfernungsmesser nach Anspruch 12, **dadurch gekennzeichnet, dass** das erste Umlenkelement (8) mit der Halterung (6) einstückig ist.

14. Optischer Entfernungsmesser nach Anspruch 12 oder 13, **dadurch gekennzeichnet, dass** die Laserdiode (3) mittels einer Lötverbindung am Block (5) befestigt ist.

15. Optischer Entfernungsmesser nach einem der Ansprüche 4 bis 11, **dadurch gekennzeichnet, dass** die Zylinderlinse (7) mit Kitt an der Laserdiode (3) befestigt ist.
